# EUROPEAN PATENT APPLICATION

(11) **EP 2 277 648 A1**
(43) Date of publication of application: **26.01.2011**
(21) Application number: 08873914.9
(22) Date of filing: 12.12.2008
(51) Int. Cl.: B23B 51/06, B23B 51/00

(54) **DEEP-HOLE BORING DRILL HEAD**

(30) Priority: 14.04.2008 JP 2008104474
(71) Applicant: UNITAC, Incorporated, Amagasaki-shi, Hyogo 661-0033 (JP)
(72) Inventor: NOMURA, Takuji, Amagasaki-shi Hyogo 661-0033 (JP)
(74) Representative: Vossius & Partner
(86) International application number: PCT/JP2008/072627
(87) International publication number: WO 2009/128183

(57) **Abstract**

Provided is a drill head for deep-hole drilling in which a cutting blade tip is mounted to face a cutting chip discharge port opened at a head distal end surface and a hollow inside is made into a cutting chip discharge passage communicating with the cutting chip discharge port, wherein high cutting efficiency based on good cutting chip dischargeability can be achieved and the cutting blade itself is also easily processed in terms of form. The drill head for deep-hole drilling is configured such that an inner end 20a of a blade edge 20 of a center portion cutting blade tip 2A is spaced apart from a head shaft center O and forms a non-cutting zone Z in the vicinity of the shaft center O, an inner side surface of the cutting blade tip 2A constitutes an inclined side surface 21 inclined from a blade point side to the head shaft center O side, a non-cutting core C of a work material W generated in the non-cutting zone Z is broken off by press-contact of the inclined side surface 21 of the cutting blade tip 2A during deep-hole drilling work.

## Description

### [Technical Field]

The present invention relates to a drill head for deep-hole drilling in which a cutting blade tip is mounted to face a cutting chip discharge port opened on a head distal end surface and in which a hollow inside is made into a cutting chip discharge passage communicating with the cutting chip discharge port.

### [Background Art]

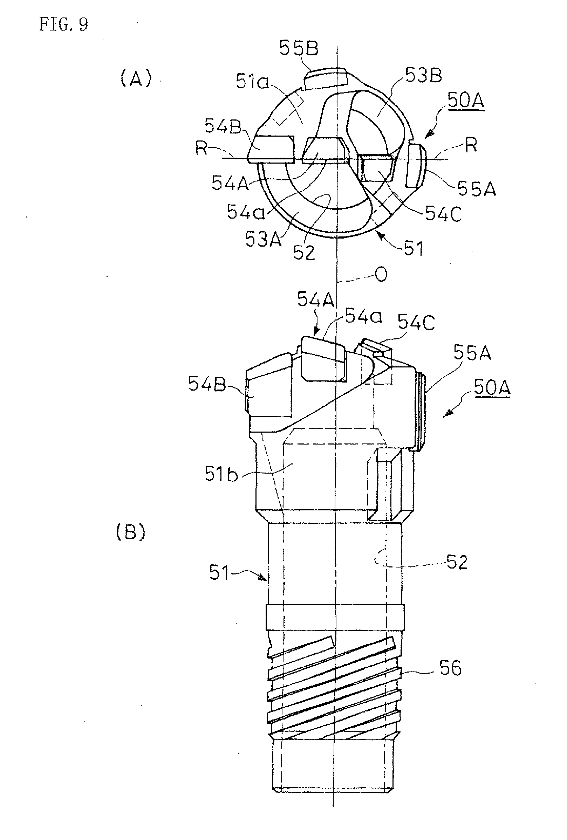

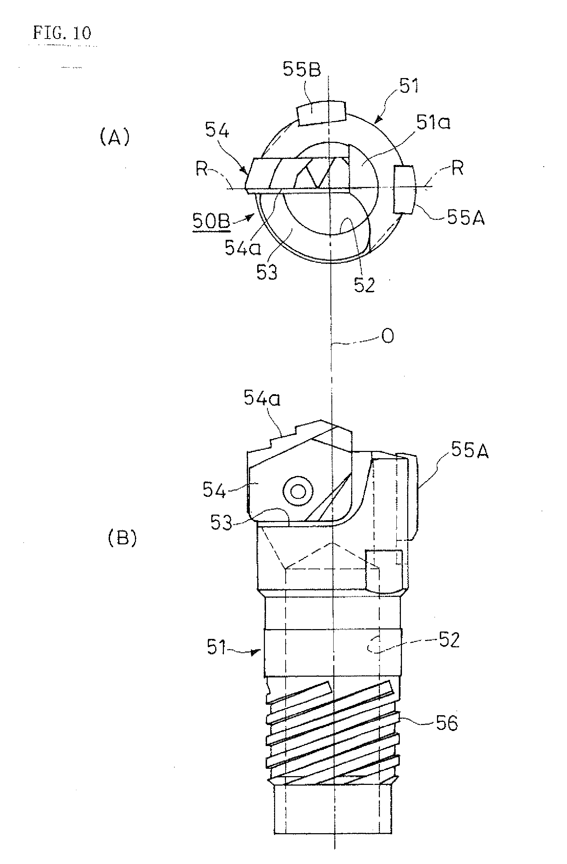

As this kind of drill head for deep-hole drilling, ones as shown in FIG. 9 and FIG. 10 have been widely used conventionally. A drill head 50A in FIG. 9 has a substantially cylindrical head main body 51 with a hollow portion 52 opened at a proximal end side and a head distal end surface 51a in a substantially obtuse conical shape provided with one large and one small cutting chip discharge ports 53A, 53B communicating with the hollow portion 52. A center portion cutting blade 54A and a circumference portion cutting blade 54B are formed on an opening side edge of the large cutting chip discharge port 53A along a head radial direction, and an intermediate portion cutting blade 54C is formed on an opening side edge of the small cutting chip discharge port 53B along the same head radial direction by brazing cutting blade tips, respectively. Further, guide pads 55A, 55B made of cemented carbide material are brazed on an outer circumferential surface 51h between both discharge ports 53A and 53B. On the other hand, a drill head 50B in FIG. 10 has one cutting chip discharge port 53 on the head distal end surface 51a and a piece of cutting blade 54 is formed on the opening side edge along the head radial direction by screw-clamping a throwaway tip. However, other configurations are almost the same as those of the drill head 50A.

These drill heads 50A, 50B are such that a proximal portion side provided with a male thread 56 on an outer circumference is threaded into and mounted on a distal end portion of a hollow boring bar whose illustration is omitted, and the boring bar is coupled to a driving shaft such as a spindle of a machine tool to be rotatingly-driven or rotate a work material side, thereby drilling the work material by cutting blades 54A to 54C and 54 to form a deep-hole. In addition, it is noted that a relative rotation direction of the drill heads 50A, 502 is a counterclockwise direction in FIG. 9(A) and FIG. 10(A). Thus, during this deep-hole drilling work, a coolant is supplied at high pressure into a cutting region through a gap between a cutting hole and the boring bar, made to flow into the hollow portion 52 together with cutting chips generated in the cutting region from the cutting chip discharge ports 53A to 53B and 53, and discharged outside through the inside of the hollow boring bar. In this manner, whole drilling is carried out in these drill heads 50A, 50B, and accordingly an inner end of a cutting blade taking charge of cutting a center portion of a cutting hole, that is, an inner end of the center portion cutting blade 54A of the drill head 50A and an inner end of the cutting blade 54 of the drill head 50B is arranged in a position beyond a head shaft center O and enters into a radially opposite side.

On the other hand, since these drill heads 50A, 50B, carry out whole drilling so that an entire cutting hole is formed by drilling, a cutting blade taking charge of cutting the center portion of the cutting hole, that is, the center portion cutting blade 54A of the drill head 50A and the cutting blade 54 of the drill head 50B is required to be set precisely such that a blade edge 54a matches with the radial line R about the head shaft center O and also the inner end of the blade edge 54a is arranged slightly beyond the head shaft center O. Therefore, a cutting rate becomes zero theoretically at the head shaft center 0 during deep-hole drilling work, and thus, a blade point portion in the shaft center O position does not exert a cutting force at what is called a chisel edge, which results in crushing a work material, and thrust resistance is loaded. As a result, this has been a factor that cutting efficiency cannot be enhanced. Further, in a configuration such as the drill head 50A that the cutting blade tip is brazed to a recessed portion of a head main body side, a brazing material intervenes at a fitting portion of the both, so that high precision assembly has been difficult.

Consequently, as for a deep-hole drilling tool employing a screw-clamping type throwaway tip as a cutting blade, the present inventor has already proposed one configured such that a sinking portion is provided to a tip side surface at a cutting blade inner end side, and the cutting blade inner end is arranged spaced apart from the head shaft center, thereby forming a non-cutting zone in the vicinity of the shaft center and breaking off a non-cutting core of a work material generated in the non-cutting zone by press-contacting with an inclined step of the sinking portion (Patent Documents 1 and 2).
Patent Document 1: Japanese Published Unexamined Patent Application No. 2003-25129
Patent Document 2: Japanese Published Unexamined Patent Application No. 2003-236713

### [Disclosure of the Invention]

### [Problems to be Solved by the Invention]

However, when a sinking portion is provided to the cutting blade side surface and the inner end of the cutting blade is arranged spaced apart from the head shaft center as in the afore-proposed throwaway tip, there is a concern that the non-cutting core generated in the shaft center position easily grows linearly to a position of contacting with the inclined step, whereupon a break-off size is enlarged and cutting chip dischargeability is reduced. Moreover, the cutting blade itself disadvantageously involves a great deal of trouble in processing and its manufacturing costs become expensive due to forming of the sinking portion on the side surface and the inclined step.

The present invention was made in view of the foregoing circumstances, and accordingly it is an object of the present invention to provide a drill head for deep-hole drilling in which a cutting blade tip is mounted to face a cutting chip discharge port opened on a head distal end surface and a hollow inside is made into a cutting chip discharge passage communicating with the cutting chip discharge port, wherein high cutting efficiency based on good cutting chip dischargeability can be achieved and the cutting blade itself is also easily processed in terms of form.

### [Means for Solving the Problems]

Means for achieving the aforementioned object will be described with reference numerals of the accompanying drawings. A drill head for deep-hole drilling D1, D2 according to a first aspect of the present invention including one or a plurality of cutting blade tips 2A to 2C, 3 mounted to face cutting chip discharge ports 11 to 13 opened on a head distal end surface 1a, and a hollow inside made into a cutting chip discharge passage 14 communicating with the cutting chip discharge ports 11 to 13, wherein a cutting blade tip 2A, 3 taking charge of cutting the center side has an inner end 20a, 30a of a blade edge 20, 30 spaced apart from a head shaft center O and forming a non-cutting zone Z in the vicinity of the shaft center O and also has at least a blade point side on an inner side surface constituting an inclined side surface 21, 31 inclined from the blade point to the head shaft center O side, and a non-cutting core C of a work material W generated in the non-cutting zone Z is broken off by press-contact of the inclined side surface 21, 31 of the cutting blade tip 2A, 3 during deep-hole drilling work.

A second aspect of the present invention is configured such that the cutting blade tip 2A, 3 taking charge of cutting the center side has the inclined side surface 21, 31 forming an angle of 75 to 90 degrees with respect to a tip front surface 22, 32 in the drill head for deep-hole drilling D1, D2 of the first aspect.

A third aspect of the present invention is configured such that the cutting blade tip 2A, 3 taking charge of cutting the center side has the inner end 20a, 30a of the blade edge 20, 30 spaced 0.05 to 0.5 mm apart from the head shaft center O and also an inclination angle θ of the inclined side surface 21, 31 with respect to the head shaft center O is 5 to 30 degrees in the drill head for deep-hole drilling D1, D2 of the first aspect.

A fourth aspect of the present invention is configured such that the blade edge 20, 30 of the cutting blade tip 2A, 3 taking charge of cutting the center side is arranged in parallel with a radial line R about the head shaft center O and in a center-raised position 0.2 to 1.5 mm more forward in a cutting rotation direction than the radial line R in the drill head for deep-hole drilling D1, D2 of the first aspect.

A fifth aspect of the present invention is configured such that the cutting blade tips 2A to 2C are brazed to recessed portions 15a to 15c provided to a head main body 1 in the drill head for deep-hole drilling D1 of the first aspect as described above.

A sixth aspect of the present invention is configured such that the whole of the blade edge 20, 30 of the cutting blade tip 2A, 3 taking charge of cutting the center side is inclined high to the head shaft center 0 side and a guide pad 6A, 7A is provided in a position on the opposite side of a mounting side of the cutting blade tip 2A, 3 on a head outer circumferential surface 1b in the drill head for deep-hole drilling D1, D2 of any one of the first to the fifth aspects as described above.

### [Effects of the Invention]

Effects of the present invention will be described with reference numerals of the drawings. First, in the drill head for deep-hole drilling D1, D2 according to the first aspect of the present invention, the inner end 20a, 30a of the blade edge 20, 30 of the cutting blade tip 2A, 3 is spaced apart from the head shaft center O. Consequently, a non-cutting zone Z is formed in the vicinity of the shaft center 0 and a non-cutting core C of a work material W is generated in the non-cutting zone Z during deep-hole drilling work. However, at least the blade point side on the inner side surface of the cutting blade tip 2A, 3 constitutes an inclined side surface 21, 31 inclined from the blade point to the head shaft center O side. Therefore, the generated non-cutting core C is forcibly pushed away laterally by press-contact of the inclined side surface 21, 31 and is broken off in such a manner as being twisted in line with rotation of the drill head D1, D2. Thus, the inclination of the inclined side surface 21, 31 increases the degree of lateral displacement from the head shaft center O as the non-cutting core C becomes longer. As a result, the non-cutting core C is efficiently fragmented little by little without growing long, whereupon excellent cutting chip dischargeability is secured, and high cutting efficiency is attained in cooperation with an elimination of the chisel edge in the shaft center position. On the other hand, as for the cutting blade tip 2A, 3, itself, at least the blade point side on the inner side surface thereof has only to be a simple inclined surface, so that its manufacturing can be carried out easily and at a low cost.

According to the second aspect of the present invention, the inclined side surface 21, 31 of the cutting blade tip 2A, 3 taking charge of cutting the center side forms an angle in a specific range with respect to the tip front surface 22, 32. Consequently, lateral displacement of the non-cutting core C by press-contact of the inclined side surface 21, 31 becomes larger, and fragmentation performance of the non-cutting core C is increased accordingly, while strength of a blade point at the inner end 20a, 30a side of the blade edge 20, 30 is increased and the blade point resists chipping, whereupon durability of the cutting blade tip 2A, 3 is improved.

According to the third aspect of the present invention, the inner end 20a, 30a of the blade edge 20, 30 of the cutting blade tip 2A, 3 taking charge of cutting the center side is spaced apart in a specific range from the head shaft center O, and also an inclination angle θ of the inclined side surface 21, 31 with respect to the head shaft center 0 is in a specific range. Consequently, the non-cutting core C is reliably broken off little by little at an appropriate diameter.

According to the fourth aspect of the present invention, the blade edge 20, 30 of the cutting blade tip 2A, 3 taking charge of cutting the center side is arranged in an appropriate center-raised position, so that the little by little break-off of the non-cutting core C is carried out more reliably.

According to the fifth aspect of the present invention, the cutting blade tips 2A to 2C are brazed to the recessed portions 15a to 15c provided to the head main body 1, but the blade edge 20 of the cutting blade tip 2A taking charge of cutting the center side does not need to be made in agreement with the radial line R passing through the head shaft center O. Additionally, the inner end 20a of the blade edge 20 has only to be spaced apart appropriately from the head shaft center O, too. Therefore, exact positional accuracy at the time of brazing the cutting blade tip 2A is not required, and the manufacturing of the drill head D1 is facilitated accordingly.

According to the sixth aspect of the present invention, the whole of the blade edge 20, 30 of the cutting blade tip 2A, 3 taking charge of cutting the center side is inclined high to the head shaft center 0 side, and also a guide pad 6A, 7A is provided in a position on the opposite side of the mounting side of the cutting blade tip 2A, 3 on the head outer circumferential surface 1b, so that the radial force of the cutting reaction force is directed to the opposite side of the cutting blade tip 2A, 3 and acts in such a manner as pressing the guide pad 6A, 7A on the opposite side of the cutting blade tip 2A, 3 against a cutting hole H inner circumference. Thus, drilling accuracy of the cutting hole H is improved.

### [Brief Description of the Drawings]

FIG. 1 shows a drill head for deep-hole drilling according to a first embodiment of the present invention, and FIG. 1(A) is a front view and FIG. 1(B) is a side view;
FIG. 2 is a longitudinal sectional front view showing a state of deep-hole drilling work by the drill head for deep-hole drilling;
FIG. 3 is a longitudinal sectional side view showing a behavior of a cutting central portion in the deep-hole drilling work;
FIG. 4 is an explanatory diagram showing a correlation between a center side cutting blade tip and a non-cutting core in the deep-hole drilling work;
FIG. 5 shows a drill head for deep-hole drilling according to a second embodiment of the present invention, and FIG. 5(A) is a front view and FIG. 5(B) is a side view;
FIG. 6 is a longitudinal sectional front view showing a state of deep-hole drilling work by the drill head for deep-hole drilling work;
FIG. 7 is a longitudinal sectional side view showing a behavior of a cutting central portion in the deep-hole drilling work;
FIG. 8 is an explanatory diagram showing a correlation between a center side cutting blade tip and a non-cutting core in the deep-hole drilling work;
FIG. 9 shows a configuration example of a conventional drill head for deep-hole drilling, and FIG. 9 (A) is a front view and FIG. 9(B) is a side view; and
FIG. 10 shows another configuration example of the conventional drill head for deep-hole drilling, and FIG. 10(A) is a front view and FIG. 10(B) is a side view.

### [Description of Reference Numerals]

1: Head main body
1a: Distal end surface
1b: Outer circumferential surface
11 to 13: Cutting chip discharge port
14: Hollow portion (cutting chip discharge passage)
15a to 15h: Recessed portion
2A: Center portion cutting blade tip (cutting blade tip taking charge of cutting the center side)
20: Blade edge
20a: Inner end
21: Inclined side surface
22: Tip front surface
3: Cutting blade tip (cutting blade tip taking charge of cutting the center side)
30: Blade edge
30a: Inner end
31: Inclined side surface
32: Tip front surface
6A, 7A: Guide pad
C: Non-cutting core
D1, D2: Drill head for deep-hole drilling
H: Cutting hole
O: Head shaft center
R: Radial line
W: Work material
Z: Non-cutting zone
θ: Inclination angle
f: Distance (center-raised amount)
s: Distance (eccentric distance)

### [Best Modes for Carrying Out the Invention]

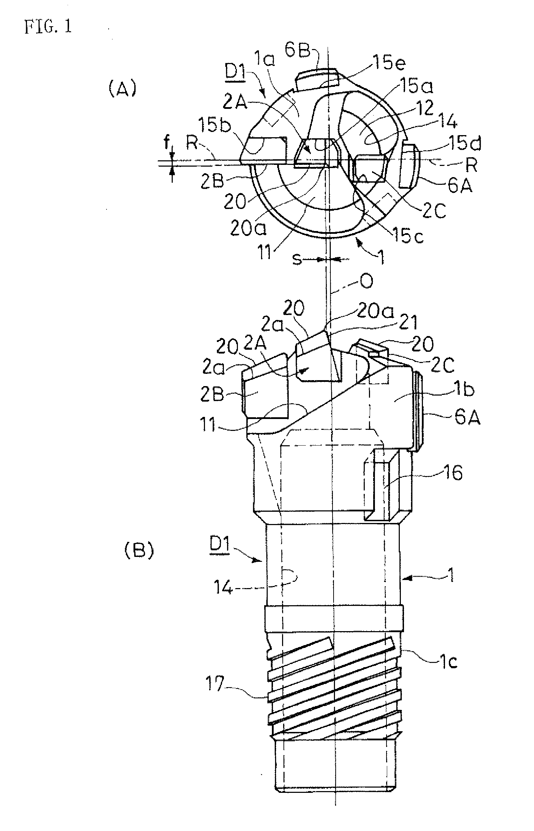

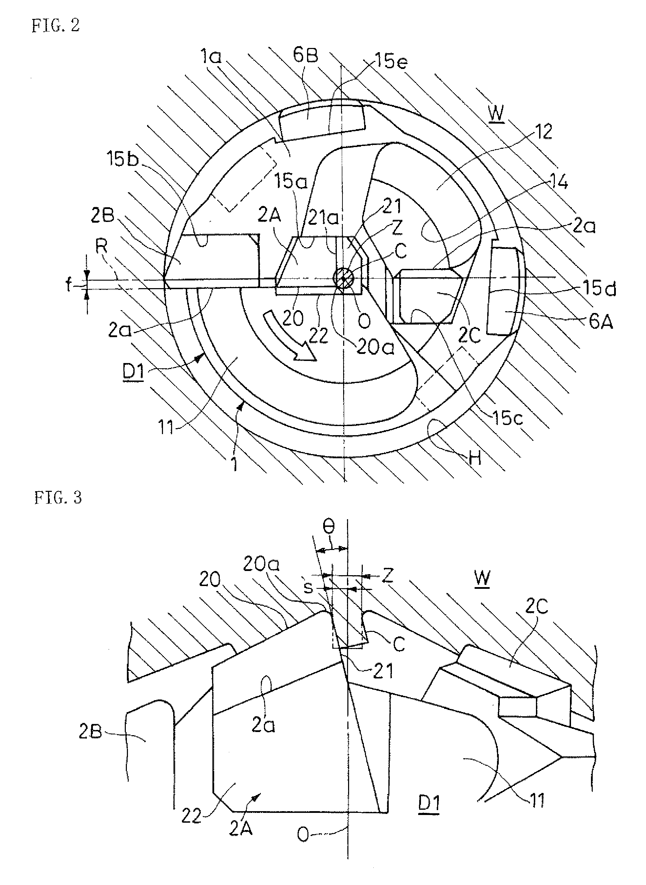

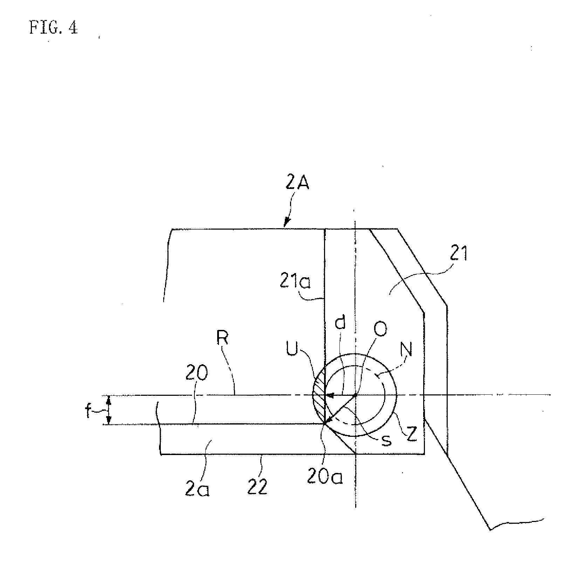

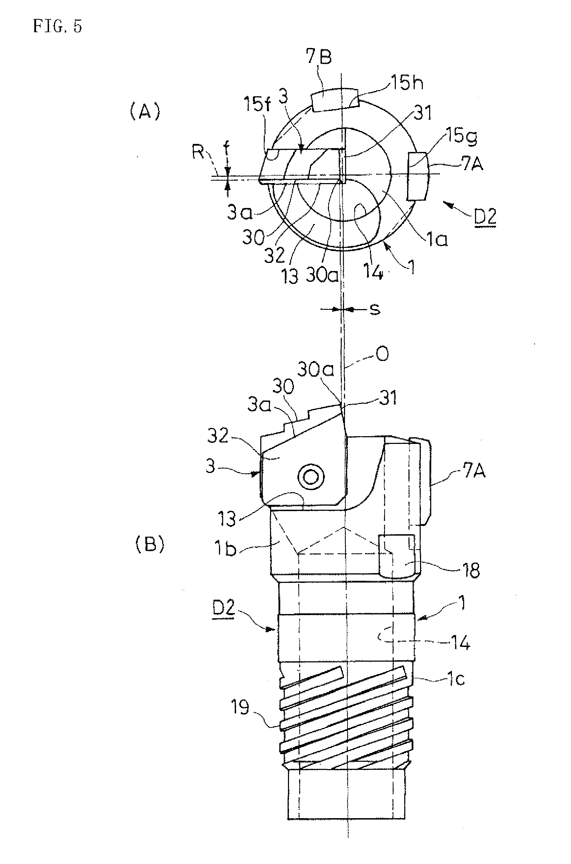

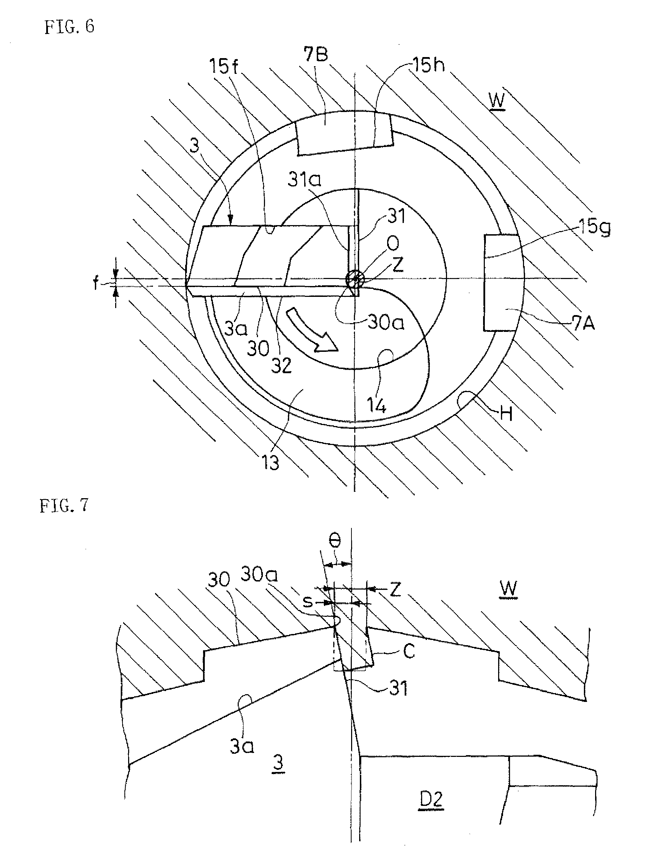

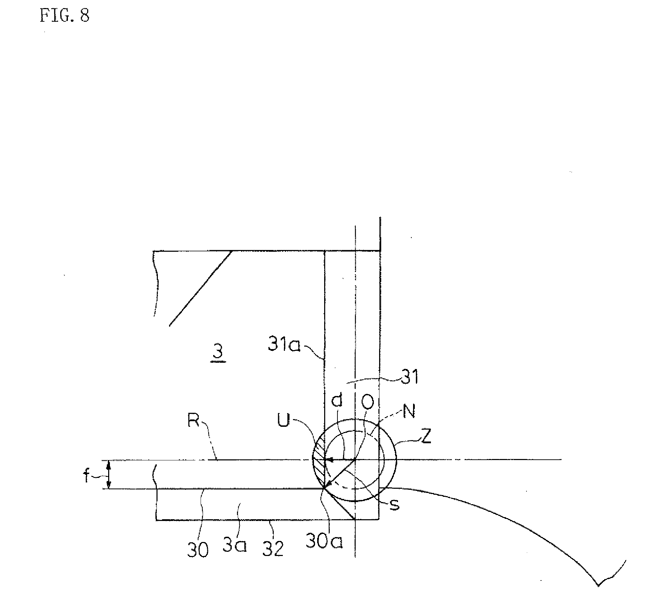

Hereinafter, embodiments of a drill head for deep-hole drilling according to the present invention will be described in detail with reference to the drawings. FIG. 1 shows a front and a side of a drill head for deep-hole drilling D1 of a first embodiment, FIG. 2 shows a state of deep-hole drilling work by the drill head D1, FIG. 3 shows a behavior of a cutting central portion in the deep-hole drilling work, FIG. 4 shows a correlation between a center side cutting blade tip and a non-cutting core in the deep-hole drilling work, FIG. 5 shows a front and a side of a drill head for deep-hole drilling D2 of a second embodiment, FIG. 6 shows a state of deep-hole drilling work by the drill head D2, FIG. 7 shows a behavior of a cutting central portion in the deep-hole drilling work, FIG. 8 shows a correlation between a center side cutting blade tip and a non-cutting core in the deep-hole drilling work, respectively.

As shown in FIG. 1(A) and FIG. 1(B), the drill head for deep-hole drilling D1 of the first embodiment has a substantially cylindrical head main body 1 with a hollow portion 14 opened at a proximal end side and a substantially obtuse conical-shaped head distal end surface 1a formed with one large and one small substantially fan-shaped cutting chip discharge ports 11, 12, arranged opposed to each other in a radial direction and communicating with the hollow portion 14, a center side cutting blade tip 2A and a circumference portion cutting blade tip 2B on an opening side edge of the large cutting chip discharge port 11 along a head radial direction, and an intermediate portion cutting blade tip 2C on an opening side edge of the small cutting discharge port 12 along the same radial direction brazed to recessed portions 15a to 15c provided to the head main body 1, respectively.

Further, on a head outer circumferential surface 1b at the distal end side of the head main body 1, recessed portions 15d, 15e are formed on the opposite side of the mounting side of the center portion cutting blade tip 2A and circumference portion cutting tip 2B, that is, on the mounting side of the intermediate portion cutting blade tip 2C and the rear side of the center portion cutting blade tip 2A. Guide pads 6A, 6B of cemented carbide material are brazed to these recessed portions 15d, 15e, and respective key ways 16 for twisting operation are formed in radially opposed positions nearer to the proximal end side than the mounting positions of these guide pads 6A, 6B. Further, a male thread 17 is formed on a head outer circumferential surface 1c at the proximal end side which is rendered smaller in outer diameter than the distal end side of the head main body 1. This proximal end side is screwed into the distal end portion having a female thread of the hollow boring bar whose illustration is omitted, thereby coupling the drill head D1 to the distal end of the boring bar.

The cutting blade tips 2A to 2C each has a blade edge 20 inclined high to the head shaft center 0 side and a stepped chip breaker 2a along the blade edge 20 at the front surface side. Thus, the center portion cutting blade tip 2A is arranged such that an inner end 20a of the blade edge 20 is spaced apart by a distance s from the head shaft center O in a position where the blade edge 20 is parallel to the radial line R about the head shaft center O and also a center thereof is raised by a distance f more forward in the cutting rotation direction than the radial line R. Further, the inner side surface of the center portion cutting blade tip 2A constitutes an inclined side surface 21 in which the whole is inclined from the blade point side to the head shaft center O side, and the surface orientation is set at a right angle to the tip front surface 22. On the other hand, the circumference portion cutting blade tip 2B and the intermediate portion cutting blade tip 2C are both arranged in such a manner that respective blade edges 20 match with the radial line R about the head shaft center O.

In deep-hole drilling work by the above-described drill head for deep-hole drilling D1, the coolant supplied through a gap between an inner circumference of a cutting hole H and an outer circumference of the hollow boring bar and drill head D1 is sent into a cutting region continuously while the drill head D1 coupled to the boring bar as already described above or a work material W is rotated, cutting chips generated in the cutting region are caught in the coolant, passed through the hollow portion 14 and a hollow inside of the boring bar from the cutting chip discharge ports 11, 12 of the drill head D1, and discharged outside.

As described above, the inner end 20a of the blade edge 20 of the center portion cutting blade tip 2A is spaced apart from the head shaft center O in this drill head for deep-hole drilling D1, whereby a circular non-cutting zone Z whose radius is an eccentric distance s is formed in the vicinity of the shaft center O, as shown in FIG. 2 and FIG. 3, and a non-cutting core C of a work material W is generated in this non-cutting zone Z. Therefore, since the inner side surface of the cutting blade tip 2A constitutes an inclined side surface 21 inclined from the blade point side to the head shaft center O side, as shown in FIG. 3, the non-cutting core C does not grow along the head shaft center O as shown by a virtual line, but is forcibly pushed away laterally by press-contact of the inclined side surface 21 as shown by a solid line, and is broken off in such a manner as being twisted in line with rotation of the drill head. Thus, the inclination of the inclined side surface 21 increases the degree of lateral displacement from the head shaft center O as the non-cutting core C becomes longer. Therefore, the non-cutting core C is efficiently fragmented little by little without growing long, whereupon excellent cutting chip dischargeability is secured, and high cutting efficiency is attained in cooperation with an elimination of the chisel edge in the shaft center position.

Furthermore, in this embodiment, the blade edge 20 of the center portion cutting blade tip 2A is arranged in a center-raised position by a distance f more forward than the radial line R about the head shaft center O, and the inclined side surface 21 at the inner end side is perpendicular to the tip front surface 22. Consequently, as shown in FIG. 4, a side surface continuing from the inner end 20a of the blade edge 20 to the rearward, that is, an upper end edge 21a on the inclined side surface 21 comes to enter into the non-cutting zone Z by the shaded portion U as shown since the shortest distance d with respect to the head shaft center O becomes shorter than the eccentric distance s of the inner end 20a of the blade edge 20. Therefore, the non-cutting core C generated by the cutting by the blade edge 20 is pushed and cut from the side by as much as the shaded portion U just after the generation, and is constricted to a circle N having a smaller radius d than the non-cutting zone Z. As a result, the non-cutting core C is easily broken off further little by little.

It is noted that the inner end 20a of the blade edge 20 of the center portion cutting blade tip 2A is shown as an acute angle for easy understanding of the description in FIG. 4, but is actually round-shaped as shown in FIG. 3 in order to resist chipping, whereby the upper end edge 21a on the inclined side surface 21 continuing to the inner end 20a also constitutes a round shape throughout its length. And, even with such a round shape, it is the same that the non-cutting core C is pushed and cut from the side by as much as the shaded portion U just after the generation.

Further, in this embodiment, the whole of the blade edge 20 of the center portion cutting blade tip 2A is inclined high to the head shaft center O side, so that the radial force of the cutting reaction force is directed to the opposite side of the cutting blade tip 2A side and acts in such a manner as pressing the guide pad 6A on the opposite side of the cutting blade tip 2A against a cutting hole H inner circumference. Thus, there is also an advantage of improving drilling accuracy of the cutting hole H. On the contrary, the radial force is directed to an outer circumference portion cutting blade 54B side when the blade edge of the center portion cutting blade 54A is inclined high around the head as in the conventional configuration of FIG. 9(A) and FIG. 9(B). As a result, the cutting hole H tends to be enlarged, which is subject to a reduction in drilling accuracy.

In the drill head D1 of this embodiment, on the other hand, the cutting blade is composed of the cutting blade tips 2A to 2C brazed to the recessed portions 15a to 15c provided to the head main body 1, but the blade edge 20 of the center portion cutting blade tip 2A does not need to be made in agreement with the radial line R passing through the head shaft center O. Additionally, the inner end 20a of the blade edge 20 also has only to be spaced apart from the head shaft center O appropriately, so that exact positional accuracy is not required at the time of brazing the center portion cutting blade tip 2A, which facilitates the manufacturing of the drill head D1 accordingly. Further, as for the center portion cutting blade tip 2A itself as well, the inner side surface thereof has only to be a simple inclined side surface 21, so that its manufacturing can be carried out easily and at a low cost.

A drill head for deep-hole drilling D2 of a second embodiment has, as shown in FIG. 5(A) and FIG. 5(B), a substantially cylindrical head main body 1 with a hollow portion 14 opened at a proximal end side and a substantially obtuse conical-shaped head distal end surface 1a formed with a substantially fan-shaped cutting chip discharge port 13 communicating with the hollow portion 14, and a cutting blade tip 3 composed of a throwaway tip is screw-clamped on an opening side edge along the head radial direction. Additionally, on a head outer circumferential surface 1b at the distal end side of the head main body 1, recessed portions 15h, 15g are formed on the opposite side of the mounting side of the cutting blade tip 3 and the rear side of the cutting blade tip 3 in the same manner as the afore-described first embodiment. Guide pads 7A, 7B of cemented carbide material are brazed to these recessed portions 15h, 15g, and also respective flat portions 18 for twisting operation are formed in radially opposed positions nearer to the proximal end side than the mounting positions of these guide pads 7A, 7B. Further, a male thread 19 is formed on the head outer circumferential surface 1c at the proximal end side which is rendered smaller in outer diameter.

The cutting blade tip 3 has a blade edge 30 forming a three-step shape and inclined high to the head shaft center O side. The cutting blade tip 3 has a stepped chip breaker 3a at the front surface side along an inclination direction of the blade edge 30. The cutting blade tip 3 is arranged such that an inner end 30a of the blade edge 30 is spaced apart by a distance s from the head shaft center 0 in a position where the blade edge 30 is parallel to the radial line R about the head shaft center 0 and also a center thereof is raised by a distance f more forward in the cutting rotation direction than the radial line R. Further, a portion at a blade point side of the inner side surface of the cutting blade tip 3 constitutes an inclined side surface 31 inclined from the blade point side to the head shaft center O side, and the surface orientation is set at a right angle to the tip front surface 32.

In deep-hole drilling work by the above-described drill head for deep-hole drilling D2, the drill head D2 is coupled to the distal end of the boring bar by the male thread 19 in the same manner as the afore-described first embodiment, the coolant supplied through a gap between an inner circumference of a cutting hole H and an outer circumference of the hollow boring bar and drill head D2 is sent into a cutting region continuously while the drill head D2 or a work material W is rotated, cutting chips are caught in the coolant, passed through the hollow portion 14 and a hollow inside of the boring bar from the cutting chip discharge port 13 of the drill head D2, and discharged outside.

In the same manner as the afore-described first embodiment, the inner end 30a of the blade edge 30 of the cutting blade tip 3 is spaced apart from the head shaft center O in this drill- head for deep-hole drilling D2 of the second embodiment as well, whereby a circular non-cutting zone Z whose radius is an eccentric distance s is formed in the vicinity of the shaft center O, as shown in FIG. 6 and FIG. 7, and a non-cutting core C of a work material W is generated in this non-cutting zone Z. Therefore, since the blade point side on the inner side surface of the cutting blade tip 3 constitutes the afore-mentioned inclined side surface 31, as shown in FIG. 7, the non-cutting core C does not grow along the head shaft center O as shown by a virtual line, either, but is forcibly pushed away laterally by press-contact of the inclined side surface 31 as shown by a solid line, and is broken off in such a manner as being twisted in line with rotation of the drill head. Then, the non-cutting core C increases the degree of lateral displacement from the head shaft center O as it becomes longer. Therefore, the non-cutting core C is efficiently fragmented little by little without growing long, whereupon excellent cutting chip dischargeability is secured, and high cutting efficiency is attained in cooperation with an elimination of the chisel edge in the shaft center position.

Furthermore, in this embodiment as well, the blade edge 30 of the cutting blade tip 3 is arranged in a center-raised position by a distance f more than the radial line R about the head shaft center O, and the inclined side surface 31 at the inner end side is perpendicular to the tip front surface 32. Consequently, as shown in FIG. 8, a side surface continuing from the inner end 30a of the blade edge 30 to the rearward, that is, an upper end edge 31a on the inclined side surface 31 comes to enter into the non-cutting zone Z by the shaded portion U as shown since the shortest distance d with respect to the head shaft center O becomes shorter than the eccentric distance s of the inner end 30a of the blade edge 30. Therefore, the non-cutting core C generated by the cutting by the blade edge 30 is pushed and cut from the side by as much as the shaded portion U just after the generation, and is constricted to a circle N having a smaller radius d than the non-cutting zone Z. As a result, the non-cutting core C is easily broken off further little by little. Further, the whole of the blade edge 30 of the cutting blade tip 3 is inclined high to the head shaft center O side, so that the radial force of the cutting reaction force is directed to the opposite side of the cutting blade tip 3 side and acts in such a manner as pressing the guide pad 7A on the opposite side of the cutting blade tip 3 against a cutting hole H inner circumference. Thus, drilling accuracy of the cutting hole H is improved.

An inclination angle θ of the inclined side surface 21, 31 at the inner end side of the cutting blade tip 2A, 3 taking charge of cutting the center portion with respect to the head shaft center O is preferably in the range of 5 to 30 degrees in the drill head for deep-hole drilling of the present invention. If the inclination angle θ is too small or too large, break-off performance (fragmentation performance) of the non-cutting core C becomes low. Further, the eccentric distance s of the inner end 20a, 30a of the blade edge 20, 30 of the cutting blade tip taking charge of cutting the center portion from the head shaft center O is preferably in the range of 0.05 to 0.5 mm. If too short, positioning of the cutting blade tip becomes difficult, whereas if too long, the non-cutting core C becomes thick, which requires a large force for break-off and leads to a reduction in cutting efficiency. Furthermore, a center-raised amount of the cutting blade tip 2A, 3 taking charge of cutting the center portion, in other words, a distance f of the blade edge 20, 30 with respect to the radial line R about the head shaft center O is preferably in the range of 0.2 to 1.5 mm for the purpose of further ensuring the little by little break-off of the non-cutting core C.

It is noted that the inclined side surface at the inner end side of the cutting blade tip taking charge of cutting the center portion is perpendicular to the tip front surface in the afore-described embodiments. However, the inclined side surface has only to be in the angle range of 75 to 90 degrees with respect to the tip front surface in the present invention. In this angle range, the lateral displacement of the non-cutting core C by press-contact of the inclined side surface becomes sufficiently large and fragmentation performance of the non-cutting core is increased accordingly, while strength of a blade point at the inner end side of the blade edge of the cutting blade tip is increased, so that the blade point resists chipping, whereupon durability of the cutting blade is improved. Moreover, detailed configurations such as the shape of the cutting blade tip, the shape of the guide pad, etc., can be modified in various ways except for the embodiments in the present invention.

## Claims

1. A drill head for deep-hole drilling comprising:
one or a plurality of cutting blade tips mounted to face a cutting chip discharge port opened at a head distal end surface; and
a hollow inside made into a cutting chip discharge passage communicating with the cutting chip discharge port,
wherein the cutting blade tip taking charge of cutting a center side has an inner end of a blade edge spaced apart from a head shaft center and forming a non-cutting zone in a vicinity of the shaft center, and at least a blade point side on an inner side surface of the cutting blade tip constitutes an inclined side surface inclined from the blade point to the head shaft center side, and
a non-cutting core of a work material generated in the non-cutting zone is broken off by press-contact of an inclination side of the cutting blade tip during deep-hole drilling work.

2. The drill head for deep-hole drilling according to claim 1, wherein the cutting blade tip taking charge of cutting the center side has the inclined side surface forming an angle of 75 to 90 degrees with respect to a tip front surface.

3. The drill head for deep-hole drilling according to claim 1, wherein the cutting blade tip taking charge of cutting the center side has an inner end of a blade edge spaced 0.05 to 0.5 mm apart from the head shaft center, and an inclination angle of the inclined side surface with respect to the head shaft center is 5 to 30 degrees.

4. The drill head for deep-hole drilling according to claim 1, wherein the cutting blade tip taking charge of cutting the center side has a blade edge arranged in parallel with a radial line about the head shaft center and in a center-raised position 0.2 to 1.5 mm more forward in a cutting rotation direction than the radial line.

5. The drill head for deep-hole drilling according to claim 1, wherein the cutting blade tip is brazed to a recessed portion provided to a head main body.

6. The drill head for deep-hole drilling according to any one of claims 1 to 5, wherein the whole of the blade edge of the cutting blade tip taking charge of cutting the center side is inclined high to the head shaft center side, and a guide pad is provided in a position on the opposite side of a mounting side of the cutting blade tip on a head outer circumferential surface.
